(19) Europäisches Patentamt
European Patent Office
Office européen des brevets

(11) **EP 2 689 699 B1**

(12) **EUROPÄISCHE PATENTSCHRIFT**

(45) Veröffentlichungstag und Bekanntmachung des Hinweises auf die Patenterteilung:
**16.03.2016 Patentblatt 2016/11**

(51) Int Cl.:
***A47J 37/00*** *(2006.01)*

(21) Anmeldenummer: **12177487.1**

(22) Anmeldetag: **23.07.2012**

(54) **Verfahren zum Einstellen einer Mikrowellenleistung und Gargerät**

Method for setting microwave power and cooking device

Procédé de réglage d'une puissance à micro-ondes et dispositif de cuisson

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.01.2014 Patentblatt 2014/05**

(73) Patentinhaber: **Topinox Sarl**
**68270 Wittenheim (FR)**

(72) Erfinder:
• **Der Erfinder hat auf seine Nennung verzichtet.**

(74) Vertreter: **Weber-Bruls, Dorothée**
**Jones Day**
**Nextower**
**Thurn-und-Taxis-Platz 6**
**60313 Frankfurt am Main (DE)**

(56) Entgegenhaltungen:
**EP-A1- 2 136 604      US-A- 4 970 359**
**US-A- 5 491 323      US-A1- 2004 115 325**

EP 2 689 699 B1

**Beschreibung**

Die Erfindung betrifft ein Verfahren zum Einstellen einer während eines Garprozesses zum Garen wenigstens eines Garguts abzugebenden Mikrowellenleistung sowie ein Gargerät zum Durchführen eines Garprozesses zum Garen wenigstens eines Garguts.

Moderne Gargeräte, insbesondere solche, die zum Einsatz in einer Großküche geeignet sind, ermöglichen es häufig, Gargut unter Verwendung einer Vielzahl von unterschiedlichen Wärmequellen zu erhitzen, beispielsweise durch Mikrowellenbestrahlung, feuchte oder trockene Warmluft, Wärmestrahlung, usw. Unterschiedliche Wärmequellen werden dabei einzeln oder in Kombination zum Erzielen eines optimalen Garergebnisses verwendet. Ein großer Vorteil der Verwendung von Mikrowellenstrahlung sind die Direktabsorption der Mikrowellenstrahlung im Gargut, die unmittelbar zu einer Erwärmung führt, sowie eine breite Auswahl an leistungsstarken Mikrowellenquellen. Von außen auf ein Gargut gerichtete Mikrowellenstrahlung hat dabei eine von der Art des Garguts, der Temperatur des Garguts, den dielektrischen Eigenschaften des Garguts und von den Eigenschaften der Mikrowellenstrahlung, insbesondere der Wellenlänge, abhängende Eindringtiefe in das Gargut. Die Eindringtiefe wird dabei im Allgemeinen durch das Längenmaß bestimmt, innerhalb dessen die Mikrowellenintensität ausgehend von einer relativen Stärke von 1 auf eine Stärke von $1/e$ gesunken ist, wobei $e$ die Euler'sche Zahl ist. Obwohl die Mikrowellenstrahlung somit ein Gargut prinzipiell weitreichend, häufig sogar vollständig, durchdringt, findet bei der Mikrowellenbestrahlung eine Erwärmung des Garguts zu wesentlichen Teilen in einem Oberflächenbereich des Garguts statt, da in tiefere Schichten des Garguts eindringende Mikrowellenstrahlung nur von relativ schwacher Intensität ist. Ebenso findet auch bei Erwärmung mittels anderer Wärmequellen in der Regel eine Erwärmung des Garguts von außen nach innen statt. Je nach Art der gewünschten Erwärmung, beispielsweise einer möglichst gleichmäßigen Erwärmung des Garguts sowohl im Inneren als auch an einer Oberfläche, oder umgekehrt bei einer gewünschten Überkrustung der Oberfläche, ist die dem Gargut zugeführte Wärmeenergie daher jeweils anzupassen.

EP 2 136 604 A1 beschreibt ein Verfahren zum Einstellen einer Mikrowellenleistung, bei dem aus der Messung einer Kerntemperatur eines Garguts zu wenigstens zwei Zeitpunkten ein Differenzenquotient gebildet wird, der den Anstieg der Kerntemperatur als Funktion der Zeit beschreibt und der durch Vergleich mit einem vorbestimmten, optimalen Differenzenquotienten zur Steuerung der Mikrowellenleistung herangezogen wird. Das Verfahren beruht dabei auf der Erkenntnis, dass die Erwärmung im Inneren des Garguts, also im Bereich der Kerntemperatur, im Wesentlichen durch Wärmediffusion innerhalb des Garguts vorbestimmt ist und daher ein maximaler Differenzenquotient existiert, der eine maximale Erwärmungsgeschwindigkeit vorgibt. Weitere, die Erwärmung des Garguts bestimmende Einflussgrößen, wie die elektrischen Eigenschaften des Garguts oder eine Temperaturverteilung innerhalb des Garguts werden nicht zur Steuerung der Mikrowellenleistung herangezogen.

Aus der US 5,491,323 ist ein Mikrowellenofen bekannt, in dem die Oberflächen- sowie Kerntemperatur eines Garguts gemessen werden, um eine Mikrowellenquelle einzuschalten, wenn die Oberflächentemperatur unterhalb eines ersten Soll-Werts liegt, die Kerntemperatur unterhalb eines zweiten Soll-Werts liegt, und die Differenz aus der Oberflächen- und Kerntemperatur innerhalb eines vorgegebenen Bereichs liegt.

Die US 4,970,359 beschreibt einen Mikrowellenofen, bei dem die Temperatur der einen Garraum verlassenden sowie die Temperatur der in eine Garraum eintretenden Atmosphäre gemessen werden, um in Abhängigkeit der entsprechenden Messergebnisse eine Mikrowellenquelle einzustellen.

DE 31 19 496 A1 beschreibt einen Temperaturmessfühler mit einer Mehrzahl von Temperatursensoren und ein Verfahren zur Steuerung einer Mikrowellenleistung in einem Gargerät, wobei mittels des Verfahrens eine Temperaturdifferenz zwischen dem wärmsten Ort im Gargut und dem kältesten Ort im Gargut minimiert werden soll. Dabei wird mittels des Temperaturmessfühlers eine maximale und eine minimale Temperatur innerhalb des Garguts bestimmt, um die Temperaturdifferenz als Steuergröße für die Mikrowellenleistung zu verwenden.

Die US 2004/0115325 betrifft ein Verfahren zum Führen eines Garprozesses in einem Garraum nach einem Garprogramm mit einem zumindest teilweise in ein Gargut im Garraum zum Erfassen zumindest zweier Temperaturwerte über zumindest zwei Temperatursensoren einzusteckenden Garprozeßfühler, bei dem Temperaturverläufe einer Oberflächentemperatur des Garguts und einer Kerntemperatur KT des Garguts über den Garprozeßfühler ermittelt werden, eine Fehlstechung des Garprozeßfühlers außerhalb des Garguts erfasst wird und zumindest ein Warnsignals, akustischer und/oder optischer Natur, erzeugt sowie zu einem Notprogramm und/oder Abbrechen des Garprogramms bei erfaßter Fehlstechung gewechselt.Es ist die Aufgabe der Erfindung, ein dem gegenüber verbessertes Verfahren zum Einstellen einer während eines Garprozesses zum Garen wenigstens eines Garguts abzugebenden Mikrowellenleistung sowie ein zum Durchführen dieses Verfahren geeignetes Gargerät anzugeben.

Diese Aufgabe wird erfindungsgemäß durch ein Verfahren mit den Merkmalen des Anspruchs 1 sowie durch ein Gargerät mit den Merkmalen des Anspruchs 12 gelöst.

Das erfindungsgemäße Verfahren zum Einstellen einer während eines Garprozesses zum Garen wenigstens eines Garguts abzugebenden Mikrowellenleistung umfasst die folgenden Schritte:

- Bestimmen wenigstens einer ersten Temperatur, vorzugsweise Kerntemperatur des Garguts, an einem ersten Ort,
- Bestimmen wenigstens einer zweiten Temperatur, vorzugsweise der wärmsten Temperatur und/oder der Oberflächentemperatur des Garguts, an einem zweiten Ort, wobei der erste Ort und der zweite Ort einen räumlichen Abstand zueinander aufweisen,
- Bestimmen einer für eine mittlere Temperatur des Garguts charakteristischen ersten Bezugsgröße durch Auswerten wenigstens der ersten Temperatur, der zweiten Temperatur und des räumlichen Abstands des ersten Orts und des zweiten Orts,
- Bestimmen wenigstens eines temperaturabhängigen und/oder gargutspezifischen Steuerparameters aus der ersten Bezugsgröße, und
- Einstellen der Mikrowellenleistung in Abhängigkeit von dem wenigstens einen Steuerparameter.

Vorzugsweise ist vorgesehen, dass die erste Bezugsgröße bestimmt wird durch Berechnen einer charakteristischen Temperatur, insbesondere durch Berechnung und/oder Bestimmung eines vorzugsweise stetigen Temperaturprofils innerhalb des Garguts und/oder Auswahl eines empirisch bestimmten, vorzugsweise stetigen Temperaturprofils innerhalb des Garguts, wobei besonders bevorzugt eine Bestimmung einer mittleren Temperatur durch Berechnung eines Integrals des Temperaturprofils in Abhängigkeit von dem Ort innerhalb des Garguts und/oder durch Mittelung des Integralwerts erfolgt.

Zweckmäßig umfasst der Steuerparameter wenigstens einen Parameter, der ausgewählt ist aus der Gruppe umfassend Eindringtiefe von Mikrowellenstrahlung in das Gargut, garrelevante dielektrische Eigenschaften des Garguts, eine dielektrische Konstante des Garguts, einen dielektrischen Verlustfaktor des Garguts und einen die Mikrowellenabsorption charakterisierender Parameter des Garguts.

Dabei ist vorzugsweise vorgesehen, dass der Steuerparameter bestimmt wird durch Berechnung eines Parameters, Auswahl aus einer Datenbank von Parametern und/oder einer Berechnungsfunktion für Parameter , wobei insbesondere eine Gargutart, ein Gargutkaliber, eine Gargutzusammensetzung und/oder eine den Zustand, insbesondere Aggregatzustand des Garguts beschreibende Größe durch optische Messung, Gasmessung, Gewichtsmessung, Eingabe durch eine Bedienperson eines Gargeräts, Übermittlung durch ein Kochprogramm eines Gargeräts und/oder Auslesen aus einer Datenbank bestimmt wird.

Zweckmäßig erfolgt das Bestimmen der ersten Temperatur und/oder der zweiten Temperatur mittels eines zumindest zeitweise und/oder zumindest teilweise in das Gargut eingeführten Temperaturmessfühlers, wobei der Temperaturmessfühler vorzugsweise wenigstens zwei räumlich zueinander beabstandete Temperatursensoren umfasst.

Vorteilhaft wird die erste Temperatur bestimmt durch ein Verfahren ausgewählt aus der Gruppe umfassend Messung einer Kerntemperatur des Garguts, Extrapolation einer Kerntemperatur des Garguts und Auswahl der kältesten Temperatur aus einer Mehrzahl von bestimmten und/oder extrapolierten Temperaturen des Garguts.

Bevorzugt wird die zweite Temperatur bestimmt durch ein Verfahren ausgewählt aus der Gruppe umfassend Messung einer Oberflächentemperatur des Garguts, Extrapolation einer Oberflächentemperatur des Garguts, Messung und/oder Extrapolation der wärmsten Temperatur des Garguts, Bestimmung einer Atmosphärentemperatur außerhalb des Garguts, Auswahl von oder Bestimmung der Siedetemperatur von Wasser in einem Oberflächenbereich des Garguts und Auswahl der höchsten Temperatur aus einer Mehrzahl von bestimmten und/oder extrapolierten Temperaturen des Garguts.

Vorzugsweise werden die erste Temperatur und die zweite Temperatur zeitgleich bestimmt.

Vorteilhaft ist dabei vorgesehen, dass das Einstellen der Mikrowellenleistung durch Anpassen einer Pulsdauer einer Mikrowellenabstrahlung und/oder Anpassen eines Pulsabstands einer Mikrowellenabstrahlung erfolgt.

Ein erfindungsgemäßes Gargerät zum Durchführen eines Garprozesses zum Garen wenigstens eines Garguts, umfasst wenigstens eine Mikrowellenquelle und wenigstens eine Regelungseinrichtung zum Einstellen einer Mikrowellenleistung unter Verwendung des erfindungsgemäßen Verfahrens.

Vorteilhaft umfasst das Gargerät weiter eine der Regelungseinrichtung zugeordnete oder zuordenbare Speichereinrichtung, insbesondere Datenbank, in der insbesondere garrelevante dielektrische Eigenschaften von Gargütern gespeichert und/oder speicherbar sind.

Die Erfindung beruht somit auf der überraschenden Erkenntnis, dass ein verbessertes Verfahren zum Einstellen einer Mikrowellenleistung dadurch geschaffen werden kann, dass nach Bestimmung einer ersten Temperatur, insbesondere Kerntemperatur des Garguts, und einer zweiten Temperatur, insbesondere der Oberflächentemperatur des Garguts, sowie auch durch Bestimmung des räumlichen Abstands zwischen dem Ort der ersten Temperatur und dem Ort der zweiten Temperatur zumindest eine erste Bezugsgröße ermittelt werden kann, die zur Bestimmung eines Steuerparameters zum Einstellen der Mikrowellenleistung heranziehbar ist. Insbesondere hat sich herausgestellt, dass aus der ersten Temperatur, der zweiten Temperatur, und dem Abstand des ersten Orts und des zweiten Orts ein stetiges Temperaturprofil bestimmbar ist, das den Temperaturverlauf im Inneren des Garguts charakterisiert. Als Kerntemperatur wird dabei die niedrigste Temperatur im Gargut definiert, die sich - bei der normalerweise erfolgenden Erwärmung des Garguts von außen nach innen - räumlich häufig im Mittelpunkt des Garguts befindet. Ferner kann als höchste Temperatur im Gargut regelmäßig die Oberflächentemperatur des Garguts angenommen werden, wobei insbesondere bei einer Erwärmung in feuchter, beispielsweise Wasserdampf enthaltener Garatmosphäre eine der Siedetemperatur von Wasser entsprechende Oberflächentemperatur angenommen werden kann. Die Bestimmung eines charakteristischen Temperaturverlaufs des Garguts ermöglicht nun insbesondere, einen für eine mittlere Temperatur im Gargut charakteristischen Wert als erste Bezugsgröße zu ermitteln. Beispielsweise aus Kenntnis der charakteristischen Temperatur und der Gargutart lassen sich nun für die Mikrowellenabsorption des Garguts spezifische Parameter wie die Eindringtiefe der Mikrowellenstrahlung in das Gargut, die Absorptionsfähigkeit des Garguts für Mikrowellenstrahlung, die elektrischen Eigenschaften des Garguts und die Wärmeleitfähigkeit des Garguts bestimmende Parameter ermitteln, beispielsweise aus zuvor bestimmten oder gespeicherten empirischen Werten, um somit einen für die spezifische Situation des Garguts angepassten Steuerparameter zur Einstellung der Mikrowellenleistung zu gewinnen. Besonders vorteilhaft kann eine Gewichtung der Bezugsgröße erfolgen, um eine eher kernnahe oder eher oberflächennahe Temperatur zur Bestimmung des Steuerparameters zu verwenden.

Somit hat es sich als vorteilhaft erwiesen, die erste Bezugsgröße durch Berechnen einer charakteristischen Temperatur, insbesondere durch Berechnung und/oder Bestimmung eines vorzugsweise stetigen Temperaturprofils innerhalb des Garguts zu ermitteln, und/oder durch Auswahl eines empirisch bestimmten, vorzugsweise stetigen Temperaturprofils innerhalb des Garguts die erste Bezugsgröße zu bestimmen, wobei ganz besonders bevorzugt eine mittlere Temperatur durch Berechnung eines Integrals des Temperaturprofils in Abhängigkeit von dem Ort innerhalb des Garguts und/oder durch Mittelung des Integralwerts und/oder Gewichtung des Integralwerts erfolgt.

Für den Steuerparameter hat es sich als vorteilhaft herausgestellt, wenn dieser wenigstens einen Parameter umfasst, der ausgewählt ist aus der Gruppe umfassend Eindringtiefe von Mikrowellenstrahlung in das Gargut, garrelevante dielektrische Eigenschaften des Garguts, eine dielektrische Konstante des Garguts, einen dielektrischen Verlustfaktor des Garguts und einen die Mikrowellenabsorption charakterisieren der Parameter des Garguts. Der Steuerparameter kann dabei vorteilhaft durch Berechnung eines Parameters, Auswahl aus einer Datenbank von Parametern und/oder durch Eingabe eines Parameters, einer Berechnungsfunktion für Parameter und/oder einer Datenmenge von Parametern bestimmt werden. Dabei herangezogene Parameter können insbesondere in der Gargutart, in Gargutkaliber, eine Gargutzusammensetzung und/oder eine den Zustand, insbesondere Aggregatszustand des Garguts beschreibende Größe sein, die vor allem durch optische Messung, Gasmessung, Gewichtsmessung, Eingabe durch eine Bedienperson eines Gargeräts und/oder Übermittlung eines Kochprogramms eines Gargeräts sowie zusätzlich oder alternativ durch Auslesen aus einer Datenbank bestimmbar ist. Dies hat den Vorteil, dass spezifisch für das Gargut und dem Garzustand des Garguts eine einen optimalen Garvorgang ermöglichende Mikrowellenleistung zur Verfügung gestellt werden kann, um alleine oder in Kombination mit weiteren Wärmequellen eine besonders günstige Zubereitung der Speise zu ermöglichen.

Weitere Vorteile und Merkmale der Erfindung ergeben sich aus der nachstehenden Beschreibung bevorzugter Ausführungsbeispiele der Erfindung unter Bezugnahme auf die beiliegenden Figuren.

Es zeigen:

Fig. 1 Temperaturverläufe an verschiedenen Orten in einem Schweinerücken während der Garung als Funktion der Garzeit;

Fig. 2 die gemessenen Temperaturen aus Fig. 1 als Funktion des Abstands des jeweiligen Ortes vom wärmsten Messpunkt;

Fig. 3 aus den Messwerten gemäß Fig. 1 und Fig. 2 gewonnene relative Temperaturen als Funktion des Abstands des Messorts zum wärmsten Messpunkt;

Fig. 4 ein berechnetes Temperaturprofil als Funktion des Orts in einem Gargut zu einem bestimmten Zeitpunkt;

Fig. 5 während eines Garprozesses von Pastinakenpüree ermittelte Messwerte;

Fig. 6 zu den Messwerten aus Fig. 5 zugehörige dielektrische Eigenschaften des Pastinakenpürees;

Fig. 7 während eines Garprozesses von Apfelmus ermittelte Messwerte;

Fig. 8 zu den Messwerten aus Fig. 5 zugehörige dielektrische Eigenschaften des Apfelmus;

Fig. 9 eine grafische Darstellung der Mikrowellenleistung als Funktion der Prozesszeit für eine Regelung gemäß zweier Ausführungsbeispiele des erfindungsgemäßen Verfahrens.

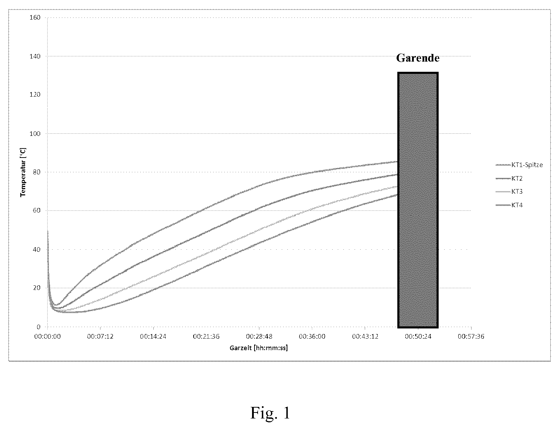

Fig. 1 bis Fig. 4 zeigen beispielhaft Temperaturverläufe an verschiedenen Orten innerhalb eines Garguts. Am Beispiel eines Schweinerückens als Gargut, wobei das Fleischstück eine Größe von 160 mm und ein Rohgewicht von ca. 770 g aufweist, wurde ein Temperaturmessspieß mit vier Temperatursensoren KT1, KT2, KT3, KT4 in das Gargut eingebracht, wobei ein erster Temperaturfühler KT1 an der Spitze des Temperaturmessfühlers jeweils eine Temperatur an einem von der Oberfläche des Garguts am weitesten entfernten Orts misst, während der äußere Temperatursensor KT4 eine Temperatur nahe der Oberfläche des Garguts ermittelt. Die Temperatursensoren KT2 und KT3 sind im Bereich zwischen der Spitze des Temperaturmessfühlers und dem an der Oberfläche des Garguts angeordneten Kerntemperatursensor KT4 angeordnet. Wie man in Fig. 1 erkennt, steigt die Temperatur während der Garzeit des Garguts am Ort jedes der Temperaturmessfühler KT1 bis KT4 an, wobei eine Temperatur an der Spitze des Temperaturmessfühlers, also am Ort des ersten Temperatursensors KT1, stets am niedrigsten ist und somit die Kerntemperatur des Garguts definiert. Dem gegenüber ist die Temperatur am Ort des vierten Temperatursensors KT4, also an der Oberfläche des Garguts, stets am höchsten. Wie Fig. 1 weiter zu entnehmen ist, steigen die Temperaturen während des Garprozesses von einer anfänglich relativ gleichförmigen Temperatur von ca. 10° C für jeden der Temperatursensoren über die gesamte Garzeit stetig an, bis der Garprozess nach Erreichen einer Soll-Kerntemperatur von ca. 65° C abgebrochen wird.

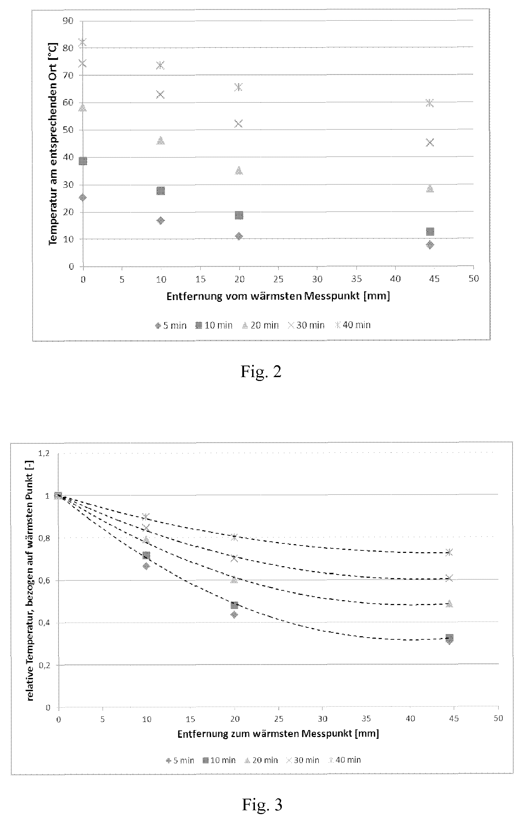

Fig. 2 zeigt die von den Temperatursensoren KT1 bis KT4 gemessenen Temperaturen zu einer Zeit von 5 Minuten, 10 Minuten, 20 Minuten, 30 Minuten und 40 Minuten nach Beginn des Garprozesses als Funktion der Entfernung vom wärmsten Messpunkt, d. h. als Funktion der Entfernung von dem oberflächennah platzierten Temperatursensor KT4.

Fig. 3 zeigt die Temperaturen aus Fig. 2 in einer weiteren Darstellung, in der eine relative Temperatur, definiert durch den Quotienten aus der Temperatur zu einem bestimmten Zeitpunkt an einem Messort geteilt durch die höchste gemessene Temperatur gemessen zu demselben Zeitpunkt, aufgetragen ist. Da die oberflächennahe Temperatur am Ort des Temperatursensors KT4 stets die höchste Temperatur ist, weist die relative Temperatur am Ort des Temperatursensors KT4 stets den Wert 1 auf. In Fig. 3 in gestrichelter Linie eingezeichnet ist ein extrapolierter Temperaturverlauf zwischen den Messwerten, der eine Abschätzung der Temperatur in einem Bereich zwischen den Temperatursensoren KT1 bis KT4 ermöglicht. Der Temperaturverlauf T(x) als Funktion der Entfernung x vom wärmsten Messort ergibt sich dabei aus der folgenden Formel:

$$T(x) = \left( \left[ -0{,}0004 \cdot ln\left(\frac{T_{min}}{T_{max}}\right) - 0{,}000008 \right] \cdot x^2 + \left[ 0{,}0284 \cdot ln\left(\frac{T_{min}}{T_{max}}\right) - 0{,}0026 \right] \cdot x + 1 \right) \cdot T_{max}$$

$T_{min}$ ist dabei die Kerntemperatur, $T_{max}$ die höchste Temperatur innerhalb des Garguts.

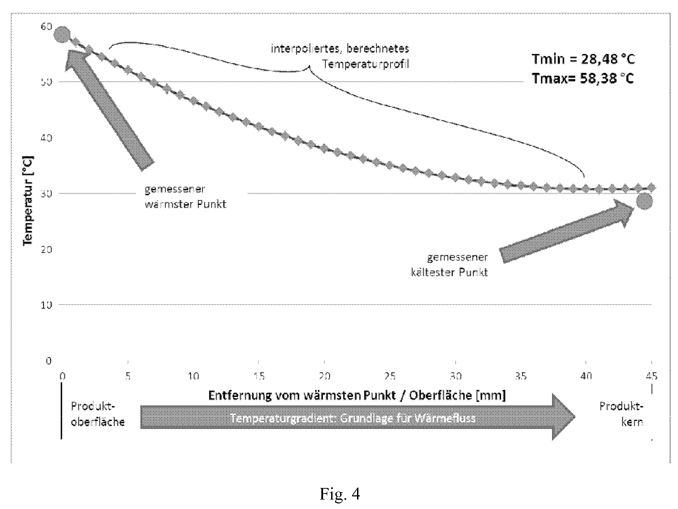

Ein beispielhafter Verlauf des Temperaturverlaufs T(x) ist in Fig. 4 dargestellt.

Dabei hat sich überraschenderweise gezeigt, dass die vorstehende Berechnung des Temperaturverlaufs T(x) für so unterschiedliche Gargüter wie Schweinerücken (770 g), Schweinenackenbraten (3,2 kg), Backkartoffeln und gedämpfte Kartoffeln gleichermaßen gültig ist. Somit lässt sich unabhängig vom Gargut und nur aus den Temperaturen $T_{min}$ und $T_{max}$ zu jedem Zeitpunkt der Temperaturverlauf im Inneren des Garguts bestimmen.

Der so bestimmte Temperaturverlauf im Inneren des Garguts lässt sich weiterhin zur Ermittlung einer Bezugsgröße zur Steuerung des Garprozesses verwenden, wie nachstehend erläutert wird. Zunächst kann eine charakteristische mittlere Temperatur des Garguts durch die Bestimmung des Integrals der Funktion T(x) bestimmt werden, das sich wie folgt berechnet:

$$\int T(x)dx = \frac{1}{6} \cdot T_{max} \cdot x_{Tmin} \cdot \left( 2 \cdot \left[ -0{,}0004 \cdot ln\left(\frac{T_{min}}{T_{max}}\right) - 0{,}000008 \right] \cdot xTmin^2 + 3 \cdot \left[ 0{,}0284 \cdot ln\left(\frac{T_{min}}{T_{max}}\right) - 0{,}0026 \right] \cdot xTmin + 6 \right)$$

Wie nachstehend nun an zwei Ausführungsbeispielen erläutert wird, lässt sich der Integralwert oder ein aus dem Integralwert bestimmter Bezugswert zur Steuerung insbesondere einer Mikrowellenleistung zum Garen des Garguts vorteilhaft verwenden.

1. Ausführungsbeispiel: Pastinakenpüree

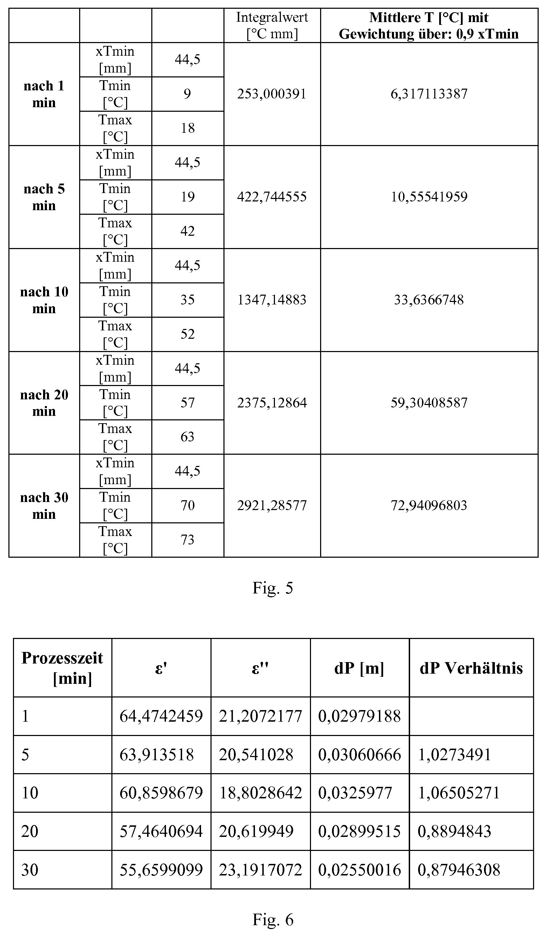

Nachstehend wird das erfindungsgemäße Verfahren zum Erwärmen eines Pastinakenpürees in einem Großbehälter auf Verzehrtemperatur beschrieben. Dabei soll eine mittlere Produkttemperatur von 75° C unter Vermeidung/Reduzierung der Oberflächenabtrocknung/Hautbildung erfolgen. Hierzu wird der Pastinakenpüree in dem Großbehälter in ein Gargerät eingebracht, welches über eine Mikrowellenquelle, eine Beschwadungseinrichtung und eine Temperaturmesseinrichtung verfügt. Die Mikrowellenquelle hat dabei eine Nennleistung von 2000 Watt. Zur Vorbereitung des Garprozesses wird der Garraum auf eine erste Soll-Temperatur gebracht, wobei unter Verwendung eines Dampfgenerators ein Garklima im Garraum eingestellt wird. Danach wird der Großbehälter mit dem zu garenden Pastinakenpüree in den Garraum eingebracht und ein Kerntemperaturmessfühler mit wenigstens zwei räumlich entfernten Temperatursensoren derart ortsfest im Pastinakenpüree angeordnet, dass ein erster Temperatursensor des Temperaturmessfühlers eine Temperatur nahe der Oberfläche des Pastinakenpürees misst, während ein zweiter Temperatursensor des Temperaturmessfühlers eine Kerntemperatur des Pastinakenpürees misst. Die so gemessene Kerntemperatur $T_{min}$ und Oberflächentemperatur $T_{max}$ wird zu Zeitpunkten 1 Minute nach Beginn des Garprozesses, sowie 5 Minuten nach Beginn des Garprozesses, 10 Minuten nach Beginn des Garprozesses, 20 Minuten nach Beginn des Garprozesses und 30 Minuten nach Beginn des Garprozesses ermittelt. Beispielhafte Messergebnisse der Temperaturmessung sind in Fig. 5 wiedergegeben. Aus den jeweils ermittelten Temperaturen $T_{min}$ und $T_{max}$ wird nun gemäß obiger Gleichung der Integralwert bestimmt, der ebenfalls in Fig. 5 angegeben ist. Ferner wird aus dem Integralwert und dem Abstand $xT_{min}$ zwischen dem Messort von $T_{min}$ und $T_{max}$ eine Bezugsgröße G=Integralwert/0,9*$xT_{min}$ bestimmt, wobei die Gewichtung der Bezugsgröße G durch 0,9*$xT_{min}$ so gewählt wird, dass eine Oberflächenabtrocknung des Pastinakenpürees vermieden wird. Die Bezugsgröße G entspricht somit einer gewichteten mittleren Temperatur des Pastinakenpürees. Entsprechend lassen sich nun bekannte, insbesondere empirisch bestimmte dielektrische Eigenschaften des Pastinakenpürees, die beispielhaft in Fig. 6 angegeben sind, bestimmen. Angegeben sind dabei die temperaturabhängige Dielektrizitätskonstante $\varepsilon'$, der temperaturabhängige dielektrische Verlustfaktor $\varepsilon''$ und die Eindringtiefe dP von Mikrowellenstrahlung bei einer Mikrowellenfrequenz von 2,45 Ghz, die in Fig. 6 in der Einheit für Meter angegeben ist. Wie man erkennt, ergibt sich über den Verlauf der Prozesszeit eine Änderung der temperaturabhängigen Größen $\varepsilon'$, $\varepsilon''$ und dP, die vorteilhaft wie folgt zur Steuerung der Mikrowellenleistung herangezogen werden kann:

Zunächst wird zu Beginn des Garvorgangs (nach einer Minute) die eingespeiste Mikrowellenleistung gemäß der Eindringtiefe dP eingeregelt, wobei beispielhaft vorgesehen sein kann, dass bei einer Eindringtiefe von dP < 1 cm eine Mikrowellenleistung von 10 % der Nennleistung eingestellt wird, bei einer Eindringtiefe dP zwischen 1 cm und 2 cm eine Leistung von 20 % der Nennleistung und bei einer Eindringtiefe dP zwischen 2 cm und 3 cm eine Mikrowellenleistung von 30 % der Nennleistung. Zu den nachfolgenden Zeitschritten nach 5 Minuten, 10 Minuten, 20 Minuten, 30 Minuten wird nun die Mikrowellenleistung wie folgt angepasst: ist die Eindringtiefe dP zum aktuellen Zeitpunkt größer als die Eindringtiefe dP zum zuletzt bestimmten Zeitpunkt, so wird die Mikrowellenleistung verdoppelt (beziehungsweise auf 100 % der Nennleistung eingestellt; falls eine Verdopplung zu einem Wert über 100 % führen würde) wenn die Eindringtiefe zum aktuellen Zeitpunkt niedriger ist als die Eindringtiefe vor dem aktuellen Zeitpunkt wird die eingestellte Mikrowellenleistung halbiert. Konkret ergibt sich somit für das erste Ausführungsbeispiel eine Mikrowellenleistungsregelung wie folgt:

Nach einer Prozesszeit von 1 Minute wird die Mikrowellenleistung auf 30 % der Nennleistung eingeregelt, nach 5 Minuten auf 60 % der Nennleistung verdoppelt, nach 10 Minuten auf 100 % der Nennleistung verdoppelt, nach 20 Minuten auf 50 % der Nennleistung halbiert und nach 30 Minuten auf 25 % der Nennleistung halbiert. Entsprechende Werte der Eindringtiefe dP sind Fig. 6 zu entnehmen.

2. Ausführungsbeispiel: Apfelmus

Ein zweites Ausführungsbeispiel des erfindungsgemäßen Verfahrens beschreibt das Erwärmen von Apfelmus in einem Großbehälter auf Verzehrtemperatur, wobei eine mittlere Produkttemperatur von 75° C unter Vermeidung/Reduzierung der Oberflächenabtrocknung/Hautbildung erreicht werden soll. Es wird wiederum eine Mikrowellenquelle mit einer Nennleistung von 2000 Watt verwendet.

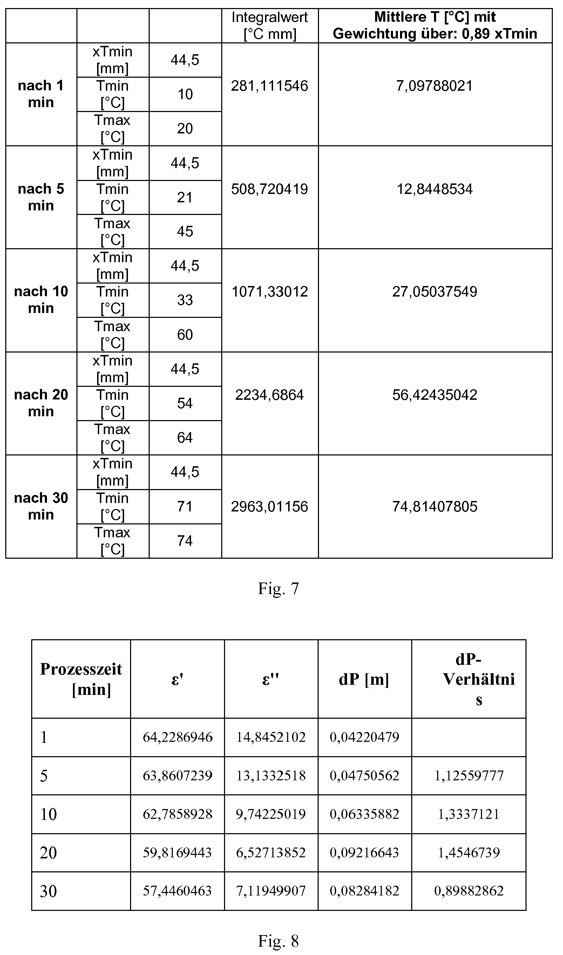

Wie im vorstehenden Ausführungsbeispiel des Pastinakenpürees wird auch der Apfelmus mittels Mikrowellenbestrahlung erwärmt, wobei eine Kerntemperatur $T_{min}$ und Oberflächentemperatur $T_{max}$ mittels eines Temperaturmessfühlers ermittelt wird. Fig. 7 zeigt die gemessenen Temperaturen, die Entfernung $xT_{min}$ zwischen den Messorten und den gemäß der oben genannten Formel berechneten Integralwert. Ferner sind in Fig. 8 die zu den jeweiligen Messwerten bestimmten dielektrischen Eigenschaften des Apfelmus angegeben.

Wie man erkennt, ergibt sich nach Beginn des Garprozesses eine Eindringtiefe dP der Mikrowellenstrahlung von ca. 4,2 cm, weshalb eine Mikrowellenleistung von 40 % der Nennleistung eingestellt wird. Wie im vorstehenden Beispiel erfolgt wiederum eine Verdopplung bzw. Halbierung der Mikrowellenleistung, wenn die Eindringtiefe anwächst bzw. sich verkleinert. Entsprechend ergibt sich die folgende Einstellung während des Garprozesses:

Nach einer Prozesszeit von 1 Minute wird die Mikrowellenleistung auf 40 % der Nennleistung eingeregelt, nach 5 Minuten auf 80 % der Nennleistung verdoppelt, nach 10 Minuten auf 100 % der Nennleistung eingestellt, nach 20 Minuten bei 100 % der Nennleistung gehalten und nach 30 Minuten auf 50 % der Nennleistung halbiert. Entsprechende Werte der Eindringtiefe dP sind Fig. 8 zu entnehmen.

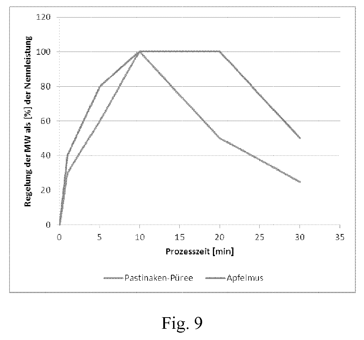

Figur 9 zeigt die eingestellte Mikrowellenleistung als Anteil der Mikrowellennennleistung als Funktion der Zeit über den Garverlauf. Wie gut zu erkennen ist, ergibt sich aufgrund der mit unterschiedlicher Gewichtung ermittelten Produkttemperaturen als Bezugsgröße und der unterschiedlichen dielektrischen Eigenschaften des Pastinakenpürees einerseits und des Apfelmus andererseits eine an das jeweilige Produkt angepasste Abgabe der Mikrowellenleistung, die jeweils eine optimale Garung des Garproduktes ermöglicht.

Vorstehend wurde das erfindungsgemäße Verfahren anhand zweier Ausführungsbeispiele erläutert, bei denen insbesondere eine Steuerung der Mikrowellenleistung nach jeweils fest vorgegebenen Zeitpunkten von 5 Minuten, 10 Minuten, 20 Minuten, 30 Minuten erfolgt. Es versteht sich, dass eine jeweilige Anpassung der Mikrowellenleistung auch kontinuierlich und/oder zu anderen dem Garprogramm angepassten Zeitpunkten erfolgen kann. Ebenso kann eine stärkere oder niedrigere Anpassung der Mikrowellenleistung, insbesondere um einen von dem verdoppelten bzw. halbierenden Faktor abweichenden Faktor, verwendet werden. Ferner kann eine Ermittlung der Bezugsgröße beispielsweise in Abhängigkeit davon, ob eine Schonung des Gargutkerns, eine Oberflächenabtrocknung, die Vermeidung einer Oberflächenabtrocknung, eine besonders langsame Garung, eine schnelle Garung und/oder eine Garung im Zusammenspiel mit bestimmten Garraumatmosphäreneinstellungen erfolgen soll, angepasst ausgewählt werden.

Bei einem zum Ausführen des erfindungsgemäßen Verfahrens angepassten Gargerät kann dabei insbesondere vorgesehen sein, dass eine Speichereinrichtung zur Speicherung von dielektrischen Eigenschaften verschiedener Gargüter vorgesehen ist, beziehungsweise entsprechende Daten durch Bedienpersonal eingebbar sind oder beispielsweise per Datenfernübertragung auf das Gargerät übertragbar sind.

**Patentansprüche**

1. Verfahren zum Einstellen einer während eines Garprozesses zum Garen wenigstens eines Garguts abzugebenden Mikrowellenleistung, **gekennzeichnet durch** folgende Schritte:

   - Bestimmen wenigstens einer ersten Temperatur ($T_{min}$) in Form der Kerntemperatur des Garguts an einem ersten Ort,
   - Bestimmen wenigstens einer zweiten Temperatur ($T_{max}$) in Form der wärmsten Temperatur und/oder der Oberflächentemperatur des Garguts an einem zweiten Ort, wobei der erste Ort und der zweite Ort einen räumlichen Abstand ($xT_{min}$) zueinander aufweisen,
   - Bestimmen einer für eine mittlere Temperatur des Garguts charakteristischen ersten Bezugsgröße (G)durch Auswerten wenigstens der ersten Temperatur ($T_{min}$), der zweiten Temperatur ($T_{max}$) und des räumlichen Abstands ($xT_{min}$) des ersten Orts und des zweiten Orts,
   - Bestimmen wenigstens eines temperaturabhängigen und/oder gargutspezifischen Steuerparameters aus der ersten Bezugsgröße (G), und
   - Einstellen der Mikrowellenleistung in Abhängigkeit von dem wenigstens einen Steuerparameter.

2. Verfahren nach Anspruch 1, **dadurch gekennzeichnet, dass** die erste Bezugsgröße (G) bestimmt wird durch Berechnen einer charakteristischen Temperatur, insbesondere durch Berechnung und/oder Bestimmung eines vorzugsweise stetigen Temperaturprofils innerhalb des Garguts und/oder Auswahl eines empirisch bestimmten, vorzugsweise stetigen Temperaturprofils innerhalb des Garguts.

3. Verfahren nach Anspruch 2, **dadurch gekennzeichnet, dass** eine Bestimmung der mittleren Temperatur durch Berechnung eines Integrals des Temperaturprofils in Abhängigkeit von dem Ort innerhalb des Garguts und/oder durch Mittelung des Integralwerts erfolgt.

4. Verfahren nach einem der vorangehenden Ansprüche, **dadurch gekennzeichnet, dass** der Steuerparameter wenigstens einen Parameter umfasst, der ausgewählt ist aus der Gruppe umfassend Eindringtiefe von Mikrowellenstrahlung in das Gargut, garrelevante dielektrische Eigenschaften des Garguts, eine dielektrische Konstante des Garguts, einen dielektrischen Verlustfaktor des Garguts und einen die Mikrowellenabsorption charakterisierender Parameter des Garguts.

5. Verfahren nach einem der vorangehenden Ansprüche, **dadurch gekennzeichnet, dass** der Steuerparameter bestimmt wird durch Berechnung eines Parameters, Auswahl aus einer Datenbank von Parametern und/oder einer Berechnungsfunktion für Parameter.

6. Verfahren nach Anspruch 5, **dadurch gekennzeichnet, dass** eine Gargutart, ein Gargutkaliber, eine Gargutzusammensetzung und/oder eine den Zustand, insbesondere Aggregatzustand des Garguts beschreibende Größe durch optische Messung, Gasmessung, Gewichtsmessung, Eingabe durch eine Bedienperson eines Gargeräts, Übermittlung durch ein Kochprogramm eines Gargeräts und/oder Auslesen aus einer Datenbank bestimmt wird als Parameter.

7. Verfahren nach einem der vorangehenden Ansprüche, **dadurch gekennzeichnet, dass** das Bestimmen der ersten Temperatur ($T_{min}$) und der zweiten Temperatur ($T_{max}$) mittels eines zumindest zeitweise und/oder zumindest teilweise in das Gargut eingeführten Temperaturmessfühlers erfolgt, wobei der Temperaturmessfühler vorzugsweise wenigstens zwei räumlich zueinander beabstandete Temperatursensoren (KT1, KT2, KT3, KT4) umfasst.

8. Verfahren nach einem der vorangehenden Ansprüche, **dadurch gekennzeichnet, dass** die erste Temperatur ($T_{min}$) bestimmt wird durch ein Verfahren, das ausgewählt wird aus der Gruppe umfassend Messung einer Kerntemperatur des Garguts, Extrapolation einer Kerntemperatur des Garguts und Auswahl der kältesten Temperatur aus einer Mehrzahl von bestimmten und/oder extrapolierten Temperaturen des Garguts.

9. Verfahren nach einem der vorangehenden Ansprüche, **dadurch gekennzeichnet, dass** die zweite Temperatur ($T_{max}$) bestimmt wird durch ein Verfahren, das ausgewählt wird aus der Gruppe umfassend Messung einer Oberflächentemperatur des Garguts, Extrapolation einer Oberflächentemperatur des Garguts, Messung und/oder Extrapolation der wärmsten Temperatur des Garguts, Bestimmung einer Atmosphärentemperatur außerhalb des Garguts, Auswahl von oder Bestimmung der Siedetemperatur von Wasser in einem Oberflächenbereich des Garguts und Auswahl der höchsten Temperatur aus einer Mehrzahl von bestimmten und/oder extrapolierten Temperaturen des Garguts.

10. Verfahren nach einem der vorangehenden Ansprüche, **dadurch gekennzeichnet, dass** die erste Temperatur ($T_{min}$) und die zweite Temperatur ($T_{max}$) zeitgleich bestimmt werden.

11. Verfahren nach einem der vorangehenden Ansprüche, **dadurch gekennzeichnet, dass** das Einstellen der Mikrowellenleistung durch Anpassen einer Pulsdauer einer Mikrowellenabstrahlung und/oder Anpassen eines Pulsabstands einer Mikrowellenabstrahlung erfolgt.

12. Gargerät zum Durchführen eines Garprozesses zum Garen wenigstens eines Garguts, umfassend wenigstens eine Mikrowellenquelle und wenigstens eine Regelungseinrichtung zum Einstellen einer Mikrowellenleistung unter Verwendung des Verfahrens gemäß eines der Ansprüche 1 bis 11.

13. Gargerät nach Anspruch 12, weiter umfassend eine der Regelungseinrichtung zugeordnete oder zuordenbare Speichereinrichtung, insbesondere Datenbank, in der insbesondere garrelevante dielektrische Eigenschaften von Gargütern gespeichert und/oder speicherbar sind.

**Claims**

1. A method for adjusting a microwave power that is to be emitted during a cooking process for cooking at least one product to be cooked, **characterized by** the following steps:

   - determining, at a first location, at least a first temperature ($T_{min}$) in the form of the core temperature of the product to be cooked,
   - determining, at a second location, at least a second temperature ($T_{max}$) in the form of the hottest temperature and/or the surface temperature of the product to be cooked, the first location and the second location having a spatial distance ($xT_{min}$) from one another,
   - determining a first reference variable (G), characteristic of a mean temperature of the product to be cooked, by evaluating at least the first temperature ($T_{min}$), the second temperature ($T_{max}$) and the spatial distance ($xT_{min}$) between the first location and the second location,
   - determining from the first reference variable (G) at least one control parameter that is temperature-dependent and/or specific to the product to be cooked, and
   - adjusting the microwave power in dependency of the at least one control parameter.

2. The method according to claim 1, **characterized in that**
   the first reference variable (G) is determined by calculating a characteristic temperature, in particular by calculating and/or determining a preferably continuous temperature profile within the product to be cooked and/or selecting an empirically determined, preferably continuous temperature profile within the product to be cooked.

3. The method according to claim 2, **characterized in that** a determination of the mean temperature takes place by calculating an integral of the temperature profile in dependency of the location within the product to be cooked and/or by averaging the integral value.

4. The method according to any of the preceding claims, **characterized in that** the control parameter comprises at least one parameter selected from the group comprising depth of penetration of microwave radiation into the product to be cooked, cooking-related dielectric properties of the product to be cooked, a dielectric constant of the product to be cooked, a dielectric loss factor of the product to be cooked, and a parameter of the product to be cooked that characterizes the microwave absorption.

5. The method according to any of the preceding claims, **characterized in that** the control parameter is determined by calculating a parameter, selecting from a database of parameters and/or a calculation function for parameters.

6. The method according to claim 5, **characterized in that** a type of the product to be cooked, a calibre of the product to be cooked, a composition of the product to be cooked and/or a variable describing the state, in particular aggregate state, of the product to be cooked is determined as the parameter by optical measurement, gas measurement, weight measurement, input by an operator of a cooking appliance, transmission by a cooking program of a cooking appliance and/or reading from a database.

7. The method according to any of the preceding claims, **characterized in that** the determination of the first temperature ($T_{min}$) and of the second temperature ($T_{max}$) takes place by means of a temperature probe which is introduced at least temporarily and/or at least partially into the product to be cooked, wherein the temperature probe comprises preferably at least two temperature sensors (KT1, KT2, KT3, KT4) arranged at a spatial distance from one another.

8. The method according to any of the preceding claims, **characterized in that** the first temperature ($T_{min}$) is determined by a method selected from the group comprising measuring a core temperature of the product to be cooked, extrapolating a core temperature of the product to be cooked, and selecting the coldest temperature from a plurality of determined and/or extrapolated temperatures of the product to be cooked.

9. The method according to any of the preceding claims, **characterized in that** the second temperature ($T_{max}$) is determined by a method selected from the group comprising measuring a surface temperature of the product to be cooked, extrapolating a surface temperature of the product to be cooked, measuring and/or extrapolating the hottest temperature of the product to be cooked, determining an atmospheric temperature outside of the product to be cooked, selecting or determining the boiling temperature of water in a surface region of the product to be cooked, and selecting the highest temperature from a plurality of determined and/or extrapolated temperatures of the product to be cooked.

10. The method according to any of the preceding claims, **characterized in that** the first temperature ($T_{min}$) and the second temperature ($T_{max}$) are determined simultaneously.

11. The method according to any of the preceding claims, **characterized in that** the adjustment of the microwave power takes place by adapting a pulse duration of microwave emission and/or adapting a pulse spacing of a microwave emission.

12. A cooking appliance for carrying out a cooking process for cooking at least one product to be cooked, comprising at least one microwave source and at least one control device for adjusting a microwave power using the method according to any of claims 1 to 11.

13. The cooking appliance according to claim 12, further comprising a memory device, in particular a database, which is or can be assigned to the control device and in which in particular cooking-related dielectric properties of products to be cooked are and/or can be stored.


**Revendications**

1. Procédé pour régler la puissance de micro-ondes délivrée au cours d'un processus de cuisson pour la cuisson d'au moins un produit à cuire, **caractérisé par** les étapes suivantes consistant à:

9

- déterminer au moins une première température ($T_{min}$), sous la forme de la température à coeur du produit à cuire, à un premier emplacement,
- déterminer au moins une seconde température ($T_{max}$), sous la forme de la température la plus chaude et/ou de la température de surface du produit à cuire, à un second emplacement, le premier emplacement et le second emplacement ayant une distance spatiale ($xT_{min}$) l'un de l'autre,
- déterminer une première grandeur de référence (G) caractéristique d'une température moyenne du produit à cuire, en évaluant au moins la première température ($T_{min}$), la seconde température ($T_{max}$) et/ou la distance spatiale ($xT_{min}$) du premier emplacement et du second emplacement,
- déterminer au moins un paramètre de commande en fonction de la température et/ou spécifique au produit à cuire à partir de la première grandeur de référence (G), et
- régler la puissance des micro-ondes en fonction du au moins un paramètre de commande.

**2.** Procédé selon la revendication 1, **caractérisé en ce que** la première grandeur de référence (G) est déterminée en calculant une température caractéristique, en particulier par calcul et/ou détermination d'un profil de température de préférence constant dans le produit à cuire et/ou sélection d'un profil de température de préférence constant déterminé de manière empirique dans le produit à cuire.

**3.** Procédé selon la revendication 2, **caractérisé en ce qu'**une détermination de la température moyenne par calcul d'une intégrale du profil de température survient en fonction de l'emplacement dans le produit à cuire et/ou en faisant la moyenne de la valeur d'intégrale.

**4.** Procédé selon l'une quelconque des revendications précédentes, **caractérisé en ce que** le paramètre de commande comprend au moins un paramètre, lequel est sélectionné dans le groupe comprenant la pénétration du rayonnement de micro-ondes dans le produit à cuire, des propriétés diélectriques en rapport avec la cuisson du produit à cuire, une constante diélectrique du produit à cuire, un facteur de perte diélectrique du produit à cuire et un paramètre caractéristique de l'absorption de micro-ondes du produit à cuire.

**5.** Procédé selon l'une quelconque des revendications précédentes, **caractérisé en ce que** le paramètre de commande est déterminé par calcul d'un paramètre, choisi parmi une banque de données de paramètres et/ou une fonction de calcul de paramètre.

**6.** Procédé selon la revendication 5, **caractérisé en ce qu'**un type de produit à cuire, un calibre de produit à cuire, une composition de produit à cuire et/ou une grandeur descriptive de l'état, en particulier de l'état d'agrégation du produit à cuire vont être déterminés comme paramètre par mesure optique, mesure de gaz, mesure de poids, saisie par une personne utilisatrice d'un appareil de cuisson, transmission au moyen d'un programme de cuisson d'un appareil de cuisson et/ou extraction d'une banque de données.

**7.** Procédé selon l'une quelconque des revendications précédentes, **caractérisé en ce que** la détermination de la première température ($T_{min}$) et de la seconde température ($T_{max}$) est réalisée au moyen d'une sonde de température insérée au moins temporairement et/ou au moins partiellement dans le produit à cuire, dans lequel la sonde de température comprend de préférence au moins deux capteurs de température (KT1, KT2, KT3, KT4) espacés spatialement les uns des autres.

**8.** Procédé selon l'une quelconque des revendications précédentes, **caractérisé en ce que** la première température ($T_{min}$) est déterminée au moyen d'un procédé sélectionné dans le groupe comprenant mesure de la température à coeur du produit à cuire, extrapolation d'une température à coeur du produit à cuire et sélection de la température la plus froide parmi une pluralité de températures déterminées et/ou extrapolées du produit à cuire.

**9.** Procédé selon l'une quelconque des revendications précédentes, **caractérisé en ce que** la seconde température ($T_{max}$) est déterminée au moyen d'un procédé sélectionné dans le groupe comprenant mesure de la température de surface du produit à cuire, extrapolation de la température de surface du produit à cuire, mesure et/ou extrapolation de la température la plus chaude du produit à cuire, détermination de la température ambiante à l'extérieur du produit à cuire, sélection ou détermination de la température d'ébullition de l'eau à une partie de surface du produit à cuire et sélection de la température la plus chaude parmi une pluralité de températures déterminées et/ou extrapolées du produit à cuire.

**10.** Procédé selon l'une quelconque des revendications précédentes, **caractérisé en ce que** la première température ($T_{min}$) et la seconde température ($T_{max}$) sont déterminées en même temps.

**11.** Procédé selon l'une quelconque des revendications précédentes, **caractérisé en ce que** le réglage de la puissance des micro-ondes est réalisé en ajustant une durée d'impulsion d'un rayonnement de micro-ondes et/ou en ajustant un intervalle entre des impulsions d'un rayonnement de micro-ondes.

**12.** Appareil de cuisson pour mettre en oeuvre un processus de cuisson pour la cuisson d'au moins un produit à cuire, comprenant au moins une source de micro-ondes et au moins un dispositif de régulation pour réguler une puissance de micro-ondes en utilisant le procédé selon l'une quelconque des revendications 1 à 11.

**13.** Procédé selon la revendication 12, comprenant en outre un dispositif de mémorisation associé ou alloué au dispositif de régulation, en particulier une banque de données, dans lequel sont ou peuvent être sauvegardées en particulier des propriétés diélectriques de produits à cuire en rapport avec la cuisson.

Fig. 1

Fig. 2

Fig. 3

Fig. 4

|  |  |  | Integralwert [°C mm] | Mittlere T [°C] mit Gewichtung über: 0,9 xTmin |
|---|---|---|---|---|
| **nach 1 min** | xTmin [mm] | 44,5 | 253,000391 | 6,317113387 |
|  | Tmin [°C] | 9 |  |  |
|  | Tmax [°C] | 18 |  |  |
| **nach 5 min** | xTmin [mm] | 44,5 | 422,744555 | 10,55541959 |
|  | Tmin [°C] | 19 |  |  |
|  | Tmax [°C] | 42 |  |  |
| **nach 10 min** | xTmin [mm] | 44,5 | 1347,14883 | 33,6366748 |
|  | Tmin [°C] | 35 |  |  |
|  | Tmax [°C] | 52 |  |  |
| **nach 20 min** | xTmin [mm] | 44,5 | 2375,12864 | 59,30408587 |
|  | Tmin [°C] | 57 |  |  |
|  | Tmax [°C] | 63 |  |  |
| **nach 30 min** | xTmin [mm] | 44,5 | 2921,28577 | 72,94096803 |
|  | Tmin [°C] | 70 |  |  |
|  | Tmax [°C] | 73 |  |  |

Fig. 5

| Prozesszeit [min] | $\varepsilon'$ | $\varepsilon''$ | dP [m] | dP Verhältnis |
|---|---|---|---|---|
| 1 | 64,4742459 | 21,2072177 | 0,02979188 |  |
| 5 | 63,913518 | 20,541028 | 0,03060666 | 1,0273491 |
| 10 | 60,8598679 | 18,8028642 | 0,0325977 | 1,06505271 |
| 20 | 57,4640694 | 20,619949 | 0,02899515 | 0,8894843 |
| 30 | 55,6599099 | 23,1917072 | 0,02550016 | 0,87946308 |

Fig. 6

|  |  |  | Integralwert [°C mm] | Mittlere T [°C] mit Gewichtung über: 0,89 xTmin |
|---|---|---|---|---|
| **nach 1 min** | xTmin [mm] | 44,5 | 281,111546 | 7,09788021 |
|  | Tmin [°C] | 10 |  |  |
|  | Tmax [°C] | 20 |  |  |
| **nach 5 min** | xTmin [mm] | 44,5 | 508,720419 | 12,8448534 |
|  | Tmin [°C] | 21 |  |  |
|  | Tmax [°C] | 45 |  |  |
| **nach 10 min** | xTmin [mm] | 44,5 | 1071,33012 | 27,05037549 |
|  | Tmin [°C] | 33 |  |  |
|  | Tmax [°C] | 60 |  |  |
| **nach 20 min** | xTmin [mm] | 44,5 | 2234,6864 | 56,42435042 |
|  | Tmin [°C] | 54 |  |  |
|  | Tmax [°C] | 64 |  |  |
| **nach 30 min** | xTmin [mm] | 44,5 | 2963,01156 | 74,81407805 |
|  | Tmin [°C] | 71 |  |  |
|  | Tmax [°C] | 74 |  |  |

Fig. 7

| Prozesszeit [min] | ε' | ε'' | dP [m] | dP-Verhältnis |
|---|---|---|---|---|
| 1 | 64,2286946 | 14,8452102 | 0,04220479 |  |
| 5 | 63,8607239 | 13,1332518 | 0,04750562 | 1,12559777 |
| 10 | 62,7858928 | 9,74225019 | 0,06335882 | 1,3337121 |
| 20 | 59,8169443 | 6,52713852 | 0,09216643 | 1,4546739 |
| 30 | 57,4460463 | 7,11949907 | 0,08284182 | 0,89882862 |

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2136604 A1
- US 5491323 A
- US 4970359 A
- DE 3119496 A1
- US 20040115325 A